# FASCICULE DE BREVET EUROPEEN

(11) **EP 0 349 893 B1**
(45) Date de publication et mention de la délivrance du brevet: **16.03.1994**
(21) Numéro de dépôt: 89111744.2
(22) Date de dépôt: 28.06.1989
(51) Int. Cl.: C09K 5/00, C23F 11/08

(54) **Inhibiteur de corrosion pour liquide aqueux utilisé pour les circuits de refroidissement, notamment ceux des moteurs à combustion interne**
Korrosionsinhibitor für wässerige Flüssigkeiten, die in Kühlkreisläufen Verwendung finden, insbesondere für Verbrennungsmotoren
Corrosion-inhibitor for aqueous liquids used in cooling systems, espcially for internal-combustion engines

(30) Priorité: 07.07.1988 FR 8809236
(43) Date de publication de la demande: 10.01.1990
(73) Titulaire: TECAFILTRES, F-95340 Persan (FR)
(72) Inventeur: Barraud, Jean-Yves, F-75010 Paris (FR); Colancon, Nicole, F-94000 Créteil (FR); Pitiot, Charles, F-60650 La Chapelle aux Pots (FR)
(74) Mandataire: Weinmiller, Jürgen

(56) Documents cités:
- DE-A- 2 218 127
- DE-A- 3 009 867
- FR-A- 2 083 816
- GB-A- 1 041 398
- US-A- 4 728 452

## Description

La présente invention concerne un inhibiteur de corrosion pour liquide aqueux utilisé pour le refroidissement des moteurs à combustion interne. Un liquide de refroidissement doit présenter une composition telle qu'il soit compatible avec l'utilisation des produits classiques d'antigel et qu'il permette d'éviter les phénomènes d'entartrage ou de dépôts dans les conduits de refroidissement, notamment lors des élévations de température. Il doit inhiber les phénomènes de corrosion par oxydation des métaux utilisés tels que l'aluminium, la fonte, l'acier, le cuivre, le laiton et les soudures. Il doit en outre protéger les tuyaux de caoutchouc.

Le brevet français FR-A-2 083 816 a proposé un inhibiteur de corrosion pour liquide aqueux de refroidissement, se présentant sous forme d'un matériau en poudre compactée comprenant une résine échangeuse d'ions dans une proportion en poids comprise entre 1 % et 50 %, du métaborate de sodium dans une proportion comprise entre 20 % et 90 %, un colorant indicateur d'acidité dans une proportion comprise entre 0,01 % et 1 %, et un corps choisi parmi le mercaptobenzothiazole, le benzotriazole, le tolytriazole, dans une proportion de l'ordre de 1,9 %.

Le brevet français FR-A- 1 069 327 prévoit une composition contenant un agent échangeur d'ions et un agent chimique ; l'agent échangeur d'ions est choisi parmi les zéolites naturelles, les résines de type polystyrène divinylbenzène sulfoniques, phénolsulfoniques et carboxyliques ; l'agent chimique est choisi parmi les borates, les nitrites, les silicates, les huiles solubles, le borate de mercaptobenzothiazole.

Le brevet américain US-A-4 728 452 propose une composition anti-corrosive contenant de nitrite soluble dans l'eau ou un mélange de nitrates et de nitrites soluble dans l'eau, un azole et un molybdate solubles dans l'eau.

Ces produits de l'art antérieur ne sont pas susceptibles d'empêcher les phénomènes de corrosion électrochimique dûs à la présence simultanée de métaux dont les écarts de potentiel électrochimique sont très élevés; ainsi celui de l'aluminium est de -2 volts, tandis que celui du fer est de 0 volts.

La présente invention a pour but d'éviter ces inconvénients et de mettre en oeuvre un liquide aqueux de refroidissement dont l'inhibiteur de corrosion permet de répondre à toutes les exigences rappelées plus haut.

La présente invention a pour objet un inhibiteur de corrosion pour liquide aqueux utilisé pour les circuits de refroidissement, notamment ceux des moteurs à combustion interne, caractérisé par le fait qu'il est constitué d'une poudre compactée présentant la composition suivante :
- 16 à 18 % de résine échangeuse d'ions calcium et magnésium
- 41 à 45 % de phosphate acide de sodium (Na₂HPO₄)
- 8 à 11 % de carbonate acide de sodium (NaHCO₃)
- 7 à 8,5 % de nitrate de sodium (NaNO₃)
- 4 à 6 % de silicate de sodium (SiO₂, Na₂O)
- 6 à 8 % de molybdate de sodium (MoO₄ Na₂)
- 2 à 4 % d'acide tartrique (C₄H₆O₆)
- 2 % ± 0,1 % de benzotriazole (C₆H₅N₃)
- 2,5 % ± 0,1 % de tolytriazole (C₇H₇N₃)
- 3 ± 0,15 % de mercaptobenzothiazole.

Une composition préférentielle est :
- 17 % de résine échangeuse d'ions
- 43 % de phosphate acide de sodium
- 9,5 % de carbonate acide de sodium
- 8 % de nitrate de sodium
- 5 % de silicate de sodium
- 7 % de molybdate de sodium
- 3 % d'acide tartrique
- 2 % de benzotriazole
- 2,5 % de tolytriazole
- 3 % de mercaptobenzothiazole.

La résine échangeuse d'ions a pour fonction de remplacer le calcium et le magnésium, en solution dans l'eau de refroidissement, par le sodium. La résine utilisée est un composé obtenu par sulfonation d'un copolymère de styrène et de divinylbenzène, par exemple avec l'acide sulfurique. Ce type de résine est réalisée par exemple par la firme Rohm and Haas Company : il s'agit de la résine vendue sous la marque AMBERLITE IRN 77.

L'addition simultanée de sels d'acide monosodique, tels que les carbonates et phosphates, augmente fortement la protection des métaux présents par la formation d'oxyde puis de phosphate.

Le choix des phosphates par rapport aux borates de l'art antérieur se justifie essentiellement par :
- une constante de dissociation des composés formés équivalente à 30 alors qu'elle est de 10 pour les borates,
- un meilleur pouvoir couvrant,
- une réserve d'alcalinité en association avec les carbonates,
- une chaîne plus longue,
- un rôle d'agent tampon en association avec l'acide tartique.

L'inhibition de corrosion de l'aluminium est assurée par la présence de nitrate et de molybdate de sodium.

Le silicate de sodium accentue le phénomène d'inhibition par son caractère de mouillant vis-à-vis des métaux présents.

La présence de molybdate accentue la protection des métaux, plus particulièrement en présence de produits antigel, tels que les alcools ou l'éthylène-glycol.

La présence de composés, tels que le tolytriazole et le benzotriazole, protège efficacement le cuivre et les alliages, en formant sur la surface métallique une couche protectrice extra mince. Cet effet évite la présence d'ions cuivre dans l'eau, néfaste du point de vue de la corrosion des métaux plus électropositifs tel que l'aluminium et le fer. Le tolytriazole est un élément complémentaire pour la protection du cuivre en présence de glycol ; il empêche en outre la dégradation des tuyaux ou joints en caoutchouc des circuits de refroidissement. Le mercapto-2-benzothiazole complète cette dernière fonction grâce à sa propriété d'accélérateur de vulcanisation des caoutchoucs.

L'addition de bleu de méthylène en trace (0,02 %) colore la solution en bleu. Il sert d'indicateur d'oxydoréduction, le virage du bleu à l'incolore se faisant au potentiel de 0,01 V.

L'ajout d'indicateur de pH peut être également envisagé, bien que la solution soit tamponnée et suffisamment réservatrice d'alcalinité. Dans une telle éventualité, le choix judicieux sera du bleu de bromothymol dont le virage du jaune au bleu se réalise à un pH compris entre 6,2 et 7,6.

D'autres caractéristiques et avantages de la présente invention apparaîtront au cours de la description suivante de la mise en oeuvre d'un exemple de liquide aqueux de refroidissement selon l'invention comportant de l'eau additionnée d'antigel et du mélange poudreux de composition suivante :

| | |
|---|---|
| Résine | 17 % |
| Na₂ H PO₄ | 43 % |
| Na H CO₃ | 9,5 % |
| Na NO₃ | 8 % |
| SiO₂, Na₂O | 5 % |
| MoO₄Na₂ | 7 % |
| Acide tartrique | 3 % |
| Benzotriazole | 2 % |
| Tolytriazole | 2,5 % |
| Mercaptobenzothiazole | 3 % |

Un premier liquide comporte 5 grammes par litre de la composition, tandis qu'un second liquide comporte 20 grammes par litre de la composition.

Ces deux liquides ont été testés selon la NORME ASTM D 1384. Des plaquettes bien définies de cuivre, de laiton, d'acier, de fonte et d'aluminium sont plongées dans les liquides dans des conditions très précises d'environnement (température, ventilation, durée, etc) ; on note les pertes de masse, ou éventuellement les augmentations de masse de ces plaquettes, en milligrammes. Le tableau I reprend les résultats obtenus après 336 heures d'essais.

**TABLEAU I**

| Liquide utilisé | 1er liquide selon l'invention | 2ème liquide selon l'invention | eau ASTM seule |
|---|---|---|---|
| Cuivre | - 0,7 mg | - 1,0 mg | - 8 mg |
| Laiton | - 0,6 mg | - 0,9 mg | - 10 mg |
| Acier | + 0,2 mg | + 0,6 mg | - 700 mg |
| Fonte | + 2,5 mg | - 1,5 mg | - 240 mg |
| Aluminium | 0,0 | - 0,6 mg | - 150 mg |
| Soudure | - 8 mg | - 10 mg | - 160 mg |

Le tableau I montre très clairement les avantages procurés par l'inhibiteur de corrosion présent dans le liquide de refroidissement selon l'invention.

On obtient ainsi un produit à longue durée d'action, et dont l'efficacité est supérieure à celle des inhibiteurs actuellement connus, en ce qui concerne la formation de dépôt ou l'attaque par voie d'oxydation dans un moteur à combustion interne.

De tous les composés énumérés ci-dessus, seule la résine échangeuse d'ions n'est pas un produit soluble en milieu aqueux. Aussi la mise en place de l'ensemble inhibiteur sur le circuit de refroidissement d'un moteur thermique nécessite de piéger cette résine en un endroit précis où la circulation du fluide est toujours assurée, par exemple au niveau du filtre. Celui-ci dont la fonction est d'arrêter les impuretés présentes dans l'ensemble du circuit de refroidissement sert de support à cet ensemble inhibiteur et piège le composé insoluble.

Bien entendu l'invention n'est pas limitée à l'exemple qui a été décrit. On pourra, sans sortir du cadre de l'invention remplacer tout produit par un produit équivalent.

## Revendications

1. Inhibiteur de corrosion pour liquide aqueux utilisé pour les circuits de refroidissement, notamment ceux des moteurs à comoustion interne, caractérisé par le fait qu'il est constitué d'une poudre compactée contenant une résine échangeuse d'ions calcium et magnésium, du benzotriazole (C₆H₅N₃), du tolytriazole (C₇H₇N₃) et du mercaptobenzothiazole,
et caractérisé par le fait que ladite poudre comprend en outre :
- 41 à 45 % de phosphate acide de sodium (Na₂HPO₄)
- 8 à 11 % de carbonate acide de sodium (NaHCO₃)
- 7 à 8,5 % de nitrate de sodium (NaNO₃)
- 4 à 6 % de silicate de sodium (SiO₂, Na₂O)
- 6 à 8 % de molybdate de sodium (MoO₄Na₂)
- 2 à 4 % d'acide tartrique (C₄H₆O₆),
. ladite résine échangeuse d'ions calcium et magnésium se trouvant dans une proportion comprise entre 16 % et 18 %,
. ledit benzotriazole se trouvant dans une proportion égale à 2 % ± 0,1 %
. ledit tolytriazole se trouvant dans une proportion égale à 2,5 % ± 0,1 %
. ledit mercaptohenzothiazole se trouvant dans une proportion égale à 3 % ± 0,15 %.

2. Inhibiteur de corrosion selon la revendication 1, caractérisé par le fait que ladite composition est la suivante :
- 17 % de résine échangeuse d'ions
- 43 % de phosphate acide de sodium
- 9,5 % de carbonate acide de sodium
- 8 % de nitrate de sodium
- 5 % de silicate de sodium
- 7 % de molybdate de sodium
- 3 % d'acide tartrique
- 2 % de benzotriazole
- 2,5 % de tolytriazole
- 3 % de mercaptobenzothiazole.

3. Inhibiteur de corrosion selon la revendication 1, caractérisé par le fait qu'il contient en outre du bleu de méthylène dans une proportion de l'ordre de 0,02 %.

4. Inhibiteur de corrosion selon l'une des revendications 1 et 2, caractérisé par le fait que ladite composition comporte en outre un indicateur de pH tel que le bleu de bromothymol.

5. Inhibiteur de corrosion selon l'une des revendications précédentes, caractérisé par le fait que ladite résine échangeuse d'ions est un composé obtenu par sulfonation d'un copolymère de styrène et de divinylbenzène.

## Claims

1. Corrosion inhibitor for aqueous liquids used in cooling systems, particularly for internal combustion engines, characterised in that it is constituted by a compressed powder containing an ion exchange resin for calcium and magnesium ions, benzotriazole (C₆H₅N₃), tolytriazole (C₇H₇N₃) and mercaptobenzothioazole, and characterised in that said powder further comprises:
- 41 to 45% disodium phosphate (Na₂HPO₄)
- 8 to 11% sodium bicarbonate (NaHCO₃)
- 7 to 8.5% sodium nitrate (NaNO₃)
- 4 to 6% sodium silicate (SiO₂, Na₂O)
- 6 to 8% sodium molybdate (MoO₄Na₂)
- 2 to 4% tartaric acid (C₄H₆O₆),
. said ion exchange resin for calcium and magnesium ions being present in a proportion of between 16% and 18%,
. said benzotriazole being present in a proportion equal to 2% ± 0.1%,
. said tolytriazole being present in a proportion equal to 2.5% ± 0.1%, and
. said mercaptobenzothiazole being present in a proportion equal to 3% ± 0.15%.

2. Corrosion inhibitor according to claim 1 characterised in that said composition is as follows:
- 17% ion exchange resin
- 43% disodium phosphate
- 9.5% sodium bicarbonate
- 8% sodium nitrate
- 5% sodium silicate
- 7% sodium molybdate
- 3% tartaric acid
- 2% benzotriazole
- 2.5% tolytriazole
- 3% mercaptobenzothiazole.

3. Corrosion inhibitor according to claim 1 characterised in that it further contains methylene blue in a proportion of about 0.02%.

4. Corrosion inhibitor according to claim 1 or claim 2 characterised in that said composition further comprises a pH indicator such as bromothymol blue.

5. Corrosion inhibitor according to any one of the preceding claims characterised in that said ion exchange resin is a compound obtained by sulphonation of a copolymer of styrene and divinylbenzene.

## Patentansprüche

1. Korrosionshemmstoff für wässrige Flüssigkeiten zur Verwendung in Kühlkreisläufen, insbesondere von Verbrennungsmotoren, dadurch gekennzeichnet, daß der Hemmstoff aus einem verdichteten Pulver besteht, das ein Kalzium- und Magnesiumionenaustauschharz, Benzotriazol (C₆H₅N₃), Tolytriazol (C₇H₇N₃) und Merkaptobenzothiazol enthält und dadurch gekennzeichnet ist, daß das Pulver weiter aufweist:
- 41 bis 45 % saures Natriumphosphat (Na₂HPO₄)
- 8 bis 11 % saures Natriumkarbonat (NaHCO₃)
- 7 bis 8,5 % Natriumnitrat (NaNO₃)
- 4 bis 6 % Natriumsilikat (SiO₂, Na₂O)
- 6 bis 8 % Natriummolybdat (MoO₄Na₂)
- 2 bis 4 % Weinsäure (C₄H₆O₆₎,
. wobei das Kalzium- und Magnesiumionenaustauschharz mit einem Anteil zwischen 16 % und 18 %,
. das Benzotriazol mit einem Anteil von 2 % ± 0,1 %,
. das Tolytriazol mit einem Anteil von 2.5 % ± 0,1 %, und
. das Merkaptobenzothiazol mit einem Anteil von 3 % ± 0,15 % vorliegt.

2. Korrosionshemmstoff nach Anspruch 1, dadurch gekennzeichnet, daß die Zusammensetzung folgende ist:
- 17 % Ionenaustauschharz
- 43 % saures Natriumphosphat
- 9,5 % Natriumkarbonat
- 8 % Natriumnitrat
- 5 % Natriumsilikat
- 7 % Natriummolybdat
- 3 % Weinsäure
- 2 % Benzotriazol
- 2,5 % Tolytriazol
- 3 % Merkaptobenzothiazol.

3. Korrosionshemmstoff nach Anspruch 1, dadurch gekennzeichnet, daß er weiter Methylenblau mit einem Anteil von etwa 0,02 % enthält.

4. Korrosionshemmstoff nach Anspruch 1 oder 2, dadurch gekennzeichnet, daß die Zusammensetzung weiter einen pH-Indikator, wie etwa Bromthymolblau, enthält.

5. Korrosionshemmstoff nach einem der vorhergehenden Ansprüche, dadurch gekennzeichnet, daß das Ionenaustauschharz eine durch Schwefelung eines Kopolymers von Styrol und Divinylbenzol erhaltene Verbindung ist.
